# NEW EUROPEAN PATENT SPECIFICATION

(11) **EP 1 220 630 B2**
(45) Date of publication and mention of the opposition decision: **24.11.2010**
(45) Mention of the grant of the patent: 30.08.2006
(21) Application number: 00985645.1
(22) Date of filing: 20.12.2000
(51) Int. Cl.: A47J 27/21

(54) **ELECTRIC WATER HEATING APPLIANCES**
ELEKTISCHER WASSERERHITZER
APPAREILS ELECTRIQUES DE CHAUFFAGE D'EAU

(30) Priority: 23.12.1999 GB 9930504; 07.04.2000 GB 0008560; 25.09.2000 GB 0023481
(43) Date of publication of application: 10.07.2002
(60) Divisional application: 05002219.3
(73) Proprietor: STRIX LIMITED, Ronaldsway, Isle of Man IM9 2RG (GB)
(72) Inventor: JOHNSTON, Simon Richard, Port St. Mary, Isle of Man IM9 5LQ (GB); MANDER, Paul Hayden, Newport, Shropshire TF10 7SX (GB)
(74) Representative: Samuels, Adrian James
(86) International application number: PCT/GB2000/004905
(87) International publication number: WO 2001/047399

(56) References cited:
- EP-A- 0 510 863
- EP-A- 0 992 458
- WO-A-96/22045
- WO-A-99/02080
- WO-A-99/35091
- WO-A1-99/02080
- WO-A1-99/53813
- GB-A- 2 187 931
- GB-A- 2 280 595
- GB-A- 2 282 957
- GB-A- 2 282 957
- GB-A- 2 298 723
- GB-A- 2 298 723
- US-A- 3 934 118
- US-A- 5 852 281
- US-A- 6 103 114

## Description

This invention relates to electrically powered appliances for heating water, such as electric kettles, hot water jugs, beverage makers and so on, and in particular to the purification of water in such appliances.

Drinking water supplies may potentially be contaminated by many sources which may include, but are not limited to, hazardous household wastes, agricultural chemicals, landfills, fuel sources and storage tanks, animal waste, septic systems, industrial materials, incorrect water storage and processing and leaching of materials from plumbing systems.

Examples of materials which have been identified in drinking water systems include volatile organic compounds, pesticides, pharmaceuticals, radon, lead, mercury, iron, asbestos fibres, nitrates, sulphates, micro-organisms and hardness resulting from excess calcium or magnesium.

The presence of these materials in drinking water may result in problems with taste and odour, visible particulates, colour, scale deposition and risk of exposure to micro-organisms. Consumer concerns about the potential aesthetic and health related problems resulting from the presence of these contaminants has promoted the development of home water treatment systems to improve the quality of the water supply. Such systems can reduce the presence of common contaminants resulting in clearer, safer and better tasting and smelling water for household use.

Home treatment systems presently available include carbon filters, ion exchange resins, fibre filters, reverse osmosis, distillation, ozonation, UV treatment and disinfection processes.

The use of a carbon filter will remove most of the organic compounds which can cause taste and odour problems, along with chlorine resulting from disinfection processes which has been implicated as a source of secondary disinfection products that are detrimental to human health. The effectiveness of the carbon filter is dependent on the amount of carbon present and the contact time between the carbon and the water. However, carbon filters must be replaced on a regular basis when taste or odour problems reappear, and they also suffer from a capacity to allow the proliferation of bacteria within the filter, which may result in an increased microbiological loading of the resultant filtered water.

Ion exchange resins work by exchanging ions in the water for those present on the resin, resulting in the removal or reduction in contaminants ions or charged compounds and their replacement by alternate ions from the resin. This allows the reduction or removal of a range of inorganic materials including cadmium, lead, copper, zinc, calcium, magnesium, nitrate and alkalinity. A large number of these species are associated with known health risks and the presence of calcium, magnesium and alkalinity are the cause of hard water. Hard water has a detrimental effect on washing and laundering and other water processes and forms scum on top of heated water e.g. in a teacup. It is particularly undesirable because of the deposition of scale on heating surfaces in domestic appliances, which increases the cost associated with heating water and reduces the lifetime of the appliance. The performance of currently available ion exchange resins has been shown to reduce the concentration of the following species by the percentages shown - pesticides 85%, temporary hardness 79%, zinc 86%, aluminium 80%, cadmium 95%, chlorine 90%, copper 91% and lead 88%.

The principal drawback with ion exchange resins is that during their lifetime, the resin becomes compacted and the exchange process itself causes expansion of the resin. This significantly reduces the flow rate through the resin. In a typical water filter with a lifetime of one hundred and fifty litres, the time taken to filter one litre of water may increase from one hundred and forty seconds to over three hundred seconds after a total throughput of only twenty litres. This inconsistent performance makes the application of this technology problematic in a large number of appliances.

The control of micro-organisms in domestic drinking water systems is typically provided by continuous chlorination systems that feed sufficient amounts of chlorine into the water to kill bacteria. Some chlorine must remain in the water in order to ensure the disinfection process is complete. The necessary rate of chlorination is dependent on a number of factors including the rate of flow and the pH of the water system and must therefore be carefully controlled in order to ensure successful application. The use of chlorine in water treatment may result in secondary chlorinated organic products that have been shown to result in detrimental health effects. In addition the chlorine residual contributes to taste problems.

The use of chlorination procedures at a water treatment plant does not necessarily ensure that properly disinfected water is obtained from the supply by the end user as improper application, breaches in the water supply, excess microbiological loading or stagnant or low flow areas in the supply may result in the establishment of bacteria prior to the point of usage.

Accordingly, it has been proposed, for example in FR-A-2712474 (Moulinex Swan Holdings Limited) and WO 96/22045 to provide a water filter in a kettle. WO 96/22045 discloses a kettle having a removably mounted hopper and a filter cartridge removably mounted in the base of the hopper. However, such arrangements still suffer from the problems identified above, and if the filter is not changed in time may result in incompletely treated water. Accordingly what is thus required is an improved system for treating water in a domestic water boiling appliance such as a kettle.

According to the present invention there is provided a water heating appliance as claimed in claim 1. The present invention is characterised over WO 96/22045 by the characterising portion of claim 1.

Preferably the apppliance further comprises a boiling control arranged so as to produce a prolonged boil in the appliance.

The appliance is then provided not only with a water treatment means, but also with a control which produces a prolonged boil in the appliance. By "prolonged boil" is meant a boil which is prolonged with respect to traditional vessels in which boiling is discontinued after about typically of the order of 5-30 seconds. By prolonging the boil, pathogens potentially present in drinking water are killed. Furthermore, the prolonged boiling period exposes the treatment material to sterilizing steam for a prolonged period, thereby reducing dramatically the risk of microbial growth in the treatment material.

A further advantage of an extended boiling time is that the continued nucleation of scale particles is allowed to continue throughout this period, thereby depositing the scale in the heating chamber of the appliance. This reduces the amount of scum on the water surface after the water is poured from the appliance. Preferably the control is configured and arranged so that the water is boiled for at least one minute. This time is in compliance with the World Health Organisation (WHO) recommendation that water should be boiled for at least one minute to kill harmful micro-organisms and bacteria in the water.

Preferably the treatment material in the filter comprises both activated carbon and ion exchange resin.

Preferably the treatment material is contained in a cartridge, most preferably an elongate, tubular, cartridge whereby water being poured into the appliance must flow along the length of the cartridge before entering the chamber.

As mentioned above, it is important to achieve a consistent filtration time for water passing through the filter so that filtration is complete before liquid in the appliance boils. Also, the performance of the filter is related to the amount of time which the liquid to be filtered spends passing through the filter. Accordingly, for consistent liquid quality, the filtration time should also be consistent.

Commercially available filters do not give consistent filtration times. The Applicant has recognised that the flow rate through the filter can be controlled by restricting the outlet from the filter. In this way the water flow through the filter is effectively 'choked', leading to more consistency in the flow time.

Preferably the liquid treatment filter comprises a filter chamber, a liquid treatment medium within said chamber, said chamber having a restricted outlet so as to control the flow of liquid through the treatment medium.

It has been found that this is an extremely successful way of achieving consistent treatment times. The outlet restriction helps avoid compaction of the filter material. Furthermore, the restriction allows a reduction in the depth of the filter material bed without adversely affecting performance, which is advantageous from a design part of view. The liquid treatment time and thus the quality of the liquid can be controlled by the size of the chamber outlet.

Typically the outlet of the filter chamber will be less than 1 cm, more preferably less than 6 mm and most preferably around 4 mm. This latter size has been found to give a consistent filter time of about 100 seconds per litre throughout the effective life of the filter, which is satisfactory from the water treatment point of view, and also is not so long that filtered liquid in the heating chamber of the appliance will have boiled before filtration is complete.

In a preferred embodiment, the filter comprises a plastics housing with a mesh provided at its upper and lower ends to retain the filter medium. A drainage space is preferably provided below the lower filter leading to the filter outlet. Preferably the space tapers towards the outlet.

The filter meshes may be, e.g. of plastics and mounted, e.g. bonded to, mounting flanges on the filter body, In a preferred arrangement the mesh is supported by, e.g. insert moulded in a support member, e.g. of plastics.

The filter may be mounted in or to the lid of the liquid heating vessel of the appliance, or in some other location. In some embodiments, therefore, it may depend from an undersurface of the vessel lid. In other embodiments, however, it may be mounted in an upper region of the vessel proper, for example in an opening formed in a wall extending across an upper part of the vessel body. Preferably the filter comprises means to mount it in its desired location. The filter is preferably mounted in any manner that it can be readily removed and replaced. Accordingly the filter may be fitted with a releasable fastener such as a twist lock, bayonet or similar fitting.

In accordance with the invention, a separate water hopper is provided into which water is filled and which is then mounted on the vessel. This has the advantage that the potentially smaller reservoir, rather than the whole appliance, can be taken to a tap for filling purposea. A valve mechanism is incorporated in the water reservoir such that the release of the water is initiated by the positioning of the hopper on the vessel.

To ensure that the user does not overfill the vessel, a dual fill gauge showing both the volume in the vessel and an inverse scale indicating the maximum volume to be placed in the hopper may be provided on the chamber.

Means are preferably provided for retaining a desired volume of water in the heating vessel after pouring so as to ensure that excessive element temperatures are not generated during the initial phase of the heating process by the absence of water on the surface of the heater prior to water being passed through the filter. Preferably therefore a barrier is provided, for example either on the jug body or the spout filter, in order that a small volume of water is retained in the heated region after the vessel is emptied using a typical pouring process. This retained volume may be of the order of 100 cm³.

Alternatively means may be provided to release a predetermined amount of liquid into the heating vessel as or before heating commences. In the arrangement described above with a separate water hopper, the filter may be mounted in the hopper and a filtered water chamber formed in the hopper such that when the hopper is positioned on the heating vessel a volume of filtered water is immediately released into the heating vessel.

A filter mesh is preferably provided in the spout of the heating vessel to prevent any scale formed during the heating process from being poured out of the vessel.

The compaction of the treatment material in the filter, and also the sterilisation of the treatment material, may be improved by restricting the venting of the steam to atmosphere. This promotes the flushing of steam through the treatment material. Preferably, therefore, the pouring spout of the vessel is provided with a closure which reduces the egress of steam from the spout. The closure could, for example, comprise a flap mounted in the spout. Most preferably, the flap would be pivotally mounted so as to be pivoted out of position when water is poured from the vessel.

Steam condensing within the resin promotes fluidisation of the resinous material and significantly reduces compaction, thereby assisting in ensuring that a consistent flow through the filter is obtained. A yet further advantage is that the steam pressure through the filter allows the removal of the chlorine deposited on the carbon as recommended for the regeneration of activated carbon thereby extending the lifetime of the product.

The selective channelling of steam through the treatment material is also of general application, so from a further aspect, the invention provides a water boiling appliance comprising a filter for treating water being poured into the appliance, and a pouring spout through which water is poured from the appliance, said pouring spout being provided with means to reduce or prevent egress of steam therefrom whereby more steam may pass through said filter.

In the arrangement described above with a water hopper, suitable means may be provided on the hopper which close the spout when in position during heating but which will allow water to be poured from the spout when the hopper is removed.

Preferably the time necessary to treat one litre of water does not exceed one hundred and eighty seconds, this being the amount of time considered necessary to heat the water from room temperature to boiling using a typical high power heating element.

The heater used in the appliance may be of the traditional sheathed type, either extending into the heating vessel through a wall thereof or, more preferably, mounted on the underside of the base of the vessel. Preferably, however, the heater is a so-called thick film heater. Such heaters are now widely used in kettles and hot water jugs.

The boiling control for producing a prolonged boiling time may be configured in a number of different ways. In a simple embodiment, a standard boiling control (such as a Strix U18, U28 or R48 control) may be used, but with an extended steam path to the actuator of the control. Another possibility would be to use a separate timer mechanism initiated by a steam blade or other mechanism which operates to continue boiling for the desired period of time. Electronic controls could also be used.

Preferably, however, the control is configured and arranged such that the water in the heating vessel is heated at relatively high power until it boils whereafter the power is reduced to maintain a rolling boil for the predetermined desired boiling time. This is advantageous in that the total amount of steam generated is reduced, avoiding possible problems of excess condensation outside the appliance, while at the same time producing sufficient steam to flush the filter. This control may be achieved electronically or electromechanically, for example by a system as described in WO 99/02080.

In one arrangement, two separate boiling sensitive controls are used. The first is in good fluid communication with the chamber such that it operates quite quickly after the water boils. This operates to reduce the heating power, for example by disconnecting one of two or more parallel heating elements. The other steam sensitive control is in less good fluid communication with the chamber so that it will not operate for some predetermined time thereafter. When this operates, it can completely disconnect the power supply to the heater, or it may just leave a much smaller "keep warm" element energised.

In some preferred embodiments the liquid heating vessel is provided with relatively high power heating means and relatively low power heating means, and the appliance has a first steam sensitive control for controlling the high power heating means and a second steam sensitive control for controlling the low power heating means.

The steam path to the second steam sensitive control may be via a steam passage such as a steam pipe which is in fluid communication with the interior of the vessel, and to delay the actuation of the second control, a constriction may be formed in the steam passage, most preferably at the entrance to the passage. However, to avoid the possibility of water formed by steam condensing around the entrance to the passage being retained there by surface tension, the constriction should preferably have a minimum dimension of more than about 1mm. The constriction may be in the form of an aperture in a closure of the passage, and preferably it comprises a slot formed in the end of the passage. To assist in drainage of condensed water away from the aperture, thereby reducing the possibility of water blocking the aperture, the closure is angled to the horizontal, most preferably by at least 30°.

It will be appreciated that a constricted steam passage will have broader application than in just the arrangement described herein, for example in any situation where a prolonged boiling period is required.

However, a constriction may not in fact be required, since the lower wattage for producing a rolling boil will produce less steam, meaning that it may take longer for the second control to operate in any event.

It will be appreciated that it may not be advantageous to maintain the first control in communication with the steam produced during the prolonged boil, since this may be detrimental to the operation of that control. Preferably, therefore, means are provided to break or restrict the fluid communication between the vessel interior and the first control, after it has operated.

This is an advantageous system which will have application in any context where reduced power heating is required after primary heating.

The interruption or restriction of the fluid communication with the vessel interior may be effected by a shutter which selectively covers or uncovers an aperture through which the steam flows to the first control and which is operatively coupled to the first control. The shutter may be mounted for linear or, more preferably, pivotal movement.

In the preferred embodiment, the fluid communication between the second control and the interior of the vessel is interrupted or restricted until the first control has operated. This will allow the full amount or a greater amount of steam to act on the first control, thereby ensuring rapid operation thereof.

Preferably, this interruption or restriction is effected by the flow interruption or restriction means of the first control. With such an arrangement, a single flow interruption or restriction means may be provided which alternately interrupts or restricts the flow of steam to one or other of the controls. Accordingly in the preferred embodiment, a linearly or preferably rotationally reciprocating shutter is operatively coupled to the first control to effect selective interruption of the steam supply to the first and second controls.

It is desirable to be able to operate the respective controls through a common actuator, such as a control knob or the like. Ideally, the actuator should be such that operation of the first control causes some degree of movement of the actuator, to indicate that the control has operated, and operation of the second control then producing a further movement of the actuator means. Resetting the actuator should then reset both controls. Accordingly, in a preferred embodiment of the invention, a common actuator is provided for both controls. Preferably the actuator incorporates a lost motion mechanism to ensure that operation of the first control does not cause the actuator means to move so far as to operate the second control. The actuator may, for example, comprise a linearly movable arm extending between the two controls.

Preferably, however, the actuator is a split actuator comprising associated actuator parts, a first actuator part operatively coupled to the first control and a second actuator part operatively coupled to the second control.

The actuator parts are preferably arranged such that should the first control operate then only the first actuator part will move but should the second control operates then at least the second actuator part will move. In particular, the arrangement is preferably such that should the second control operate before the first, then both actuator parts will move together and the first control also be operated by the first actuator part.

Such an arrangement is particularly important if the second control incorporates overheat protection means or means which operate the second control when the appliance is lifted from a support surface such that both the high power and low power heating means are switched off. In fact, the arrangement may have application outside the particular arrangement described above where two boiling controls are employed, for example in any arrangement wherein an appliance has high power and low power heating means which can be selectively energised, for example where the second heater is a keep warm or simmer heater intended to keep liquid in the appliance warm, but not necessarily boiling, after it has boiled initially.

Preferably the actuator parts are pivotally mounted about a common axis. Most preferably, the parts are interlocking in profile, and most preferably, a part of one part projects into the other, whereby they may both be easily operated upon together by a user.

The first actuator part may be arranged to overlie the second part such that when in one position, its movement from that position will be away from the second part and so not cause movement of the second part. The second actuator part may, however, be provided with a lip, lug or the like to pick up and move first actuator part if it has not already moved away from the second part. The interlocking profiles of the parts may, if necessary, be tapered to produce this effect.

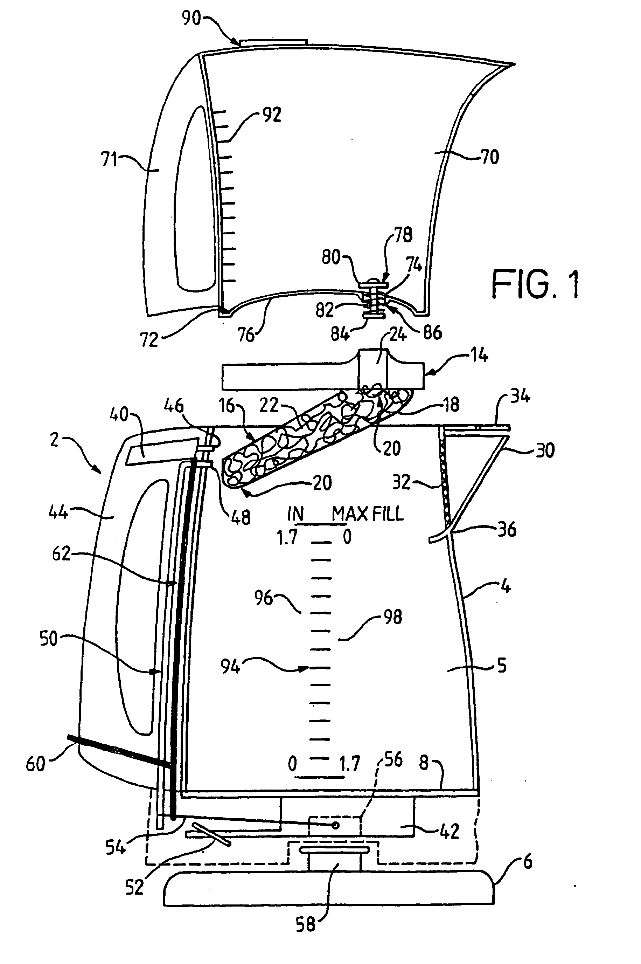

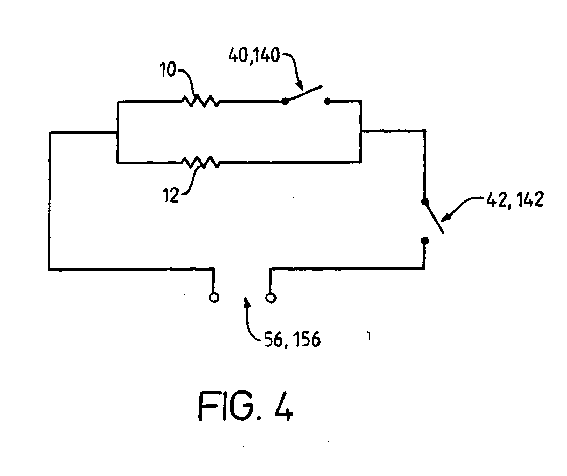

Some preferred embodiments of the invention will now be described by way of example only with reference to the accompanying drawings in which:
Figure 1 is a schematic representation of a first embodiment of the invention;
Figure 2 shows a second embodiment of the invention;
Figure 3 shows a third embodiment of the invention;
Figure 4 is a wiring diagram for the embodiment of Figure 1;
Figures 5A to 5C show an appliance in accordance with the invention in three operational conditions;
Figures 6A to 6C show the knob of the arrangement of Figures 5A to 5C in more detail, in the corresponding operational conditions;
Figures 7A to 7C show the steam shutter of the arrangement of Figures 5A to 5C in more detail in the corresponding operational conditions;
Figure 8 shows a filter in accordance with the invention;
Figure 9 shows the construction of the filter of Figure 8 in more detail; and
Figure 10 is a graph illustrating filter performance.
With reference to Figure 1, a water boiling appliance in the form of a cordless electrical kettle 2 comprises a vessel body 4 defining a water boiling vessel 5 and a power base unit 6. A thick film heater 8 is arranged in the bottom of the vessel body 4 in a known manner. The heater comprises two heating tracks 10, 12 arranged in parallel, as shown schematically in Figure 4. The first heater track 10 is rated at about 1800W and the second track 12 at about 400W.

The kettle further comprises a removable lid 14 and, removably mounted to that lid 14, an elongate filter cartridge 16. The cartridge 16 comprises a tubular outer wall 18 of plastics material closed at either end by mesh 20. The cartridge contains a combination of activated carbon and ion exchange resin 22. The cartridge 16 is, for example, clipped or twist locked into the lid 14. The cartridge 16 is mounted so as to slope away from the front of the vessel body 4. The lid has an opening 24 above the cartridge 16.

The vessel body 4 is provided with a pouring spout 30 at its upper end. A removable filter mesh 32 is provided in the spout to prevent scale and the like from being poured from the vessel body. Also, a pivotally mounted flap 34 is arranged in the mouth of the spout for reasons to be explained further below. A barrier 36 is provided on the vessel body 4 just below the spout 30 for reasons which will also be explained further below.

The appliance 2 is provided with a control which comprises two thermally sensitive switch units 40, 42. The first switch 40 is a steam sensitive switch unit arranged in the upper part of the handle 44 of the appliance 2. This switch 40 can for simplicity be a standard steam switch such as the Applicant's own R48 switch. This switch 40 is in good fluid communication with the interior of the vessel 5 via a steam opening 46 provided in the upper part of the vessel body 4. The switch 40 is, as shown in Figure 4, arranged in circuit with one of the tracks 10 of the heater 8.

The second switch unit 42 is arranged under the bottom of the vessel body 4. Again this switch 42 is a steam sensitive switch which is in fluid communication with the interior of the vessel 5 via a second opening 48 in the upper part of the vessel body 4 and a steam pipe 50. The opening 48 and/or steam pipe 50 are arranged and configured such that the switch unit 42 is in much more remote fluid communication with the space 5 than the first switch unit 40.

In this embodiment, the switch unit 42 also comprises overheat protection means for the heater 8. Most conveniently, the switch unit 42 is one of the Applicant's U28 series of controls comprising a steam sensitive bimetallic actuator 52 which upon operation trips a lever arm 54 which opens a set of contacts (not shown) in the control unit 42. A pair of bimetallic actuators (not shown) which are arranged in good thermal contact with the heater 8 act to open the same contacts in the event of the appliance overheating. As can be seen from Figure 4, the switch unit 42 is arranged in series with both heater tracks 10, 12. The control unit 42 also incorporates a cordless electrical connector 56 for engagement with a complementary connector 58 on the base unit 6.

A control knob 60 mounted on a rod 62 which extends between the first and second switch units. At its lower end, the rod is directly coupled to the lever arm 54 of the control unit 42 such that when the knob is moved to an "on" position, the lever arm 54 is also moved in a direction to reset the switch unit 42. If the knob 60 is moved to an "off" position, it will also move the lever arm 54 to its "off" position. Similarly should the switch unit 42 operate, the rod 62 and knob 60 are moved to their "off" position.

At its upper end, the rod 62 is coupled to the switch unit 40 in such a manner that when the control knob is moved to an "on" position it will reset the switch 40. However a degree of lost motion is built into this coupling such that when the switch unit 40 operates it does not move the rod 62.

Associated with the vessel 5 is a removably mounted water reservoir or hopper 70. This receives water to be poured into the vessel 5 via the filter cartridge 16. The hopper 70 is provided with a handle 71 for ease of use. The hopper 70 rests with its peripheral rim 72 on the top of the vessel body 4 and it may be provided with appropriate locating means for accurately positioning the reservoir 70 on the vessel body 4.

An opening 74 is provided in the base 76 of the hopper 70 which aligns with the opening 24 in the lid 14. The opening is fitted with a valve 78 comprising a rubber sealing member 80, a shaft 82 attached to the sealing member 80 and having a head 84. A spring 86 is arranged between the base 76 of the hopper 70 and the head and acts normally to bias the sealing member 80 against its seat to close the opening. However, when the hopper 70 is positioned on the vessel body, the head 84 is pushed upwardly to release the valve and allow water to flow into the vessel 5.

A filter life indicator "clock" 90 or the like may be provided on the hopper 70. Also, the hopper 70 may be filled with a gauge 92 showing the amount of liquid in the hopper. This is useful if a specified amount of water is to be introduced into the vessel 5 for boiling. In order that the vessel 5 is not overfilled with water, it too may be provided with a gauge 94. This shows on one side 96 how much liquid is in the vessel 2 and on the other side 98 how much liquid would have to be added to the hopper to fill the vessel to its maximum filling level.

Operation of the above embodiment will now be described. First, a desired amount of water is introduced into the hopper 70 which is placed then on the top of the vessel body 4. The valve shaft 82 is pushed upwardly when the valve head 84 abuts against the mesh 20 of the filter cartridge 16 to open the valve 80 and allow water to flow through the cartridge 16 into the vessel 5. As the water passes through the cartridge it is treated by the filter material to remove deleterious contents.

The kettle 2 is then switched on by the knob 60, which closes both switches 40,42 to energise both heating tracks 10, 12 of the heater so that the water in the kettle is heated with 2200W power. Water may still flow into the kettle 2 while the water is being heated. The hopper 70 can then be removed.

When water in the kettle 2 boils, steam is generated. Due to the presence of the spout flap 34, this steam is directed primarily out of the openings 46, 48 in the kettle body towards the switches 40, 42 and up through the filter cartridge 16. The switch 40 operates quickly and in so doing disconnects the power supply to the 1800W heater track 10. However power continues to be supplied to the 400W track, which means that the water in the vessel continues to boil, but with the generation of less steam. This avoids the potential problem of excessive condensation on surfaces outside the kettle. The steam path to the second switch 42 is arranged such that boiling will continue for a minute or more so as to ensure adequate sterilisation of the water within the kettle. For example, the end of the steam pipe 50 is offset with respect to the bimetallic actuator 52 so that the latter is not heated very quickly by condensation of steam thereon.
Alternatively, or in addition, the steam pipe 50 may be constricted to limit the flow of steam to the actuator 52.

The steam generated during the prolonged boil flushes through the cartridge material thereby de-compacting the filter material and preventing microbial growth in the filter.

When the second switch 42 operates, all power to the heater is disconnected so that boiling ceases, and the knob 60 is moved to its "off" position. The water can then be poured from the kettle 2 through the spout 30. The spout flap 34 is pivoted out of the way by the water as it is poured. The barrier 36 below the spout 30 acts to retain a certain amount of water (typically about 100cm³) in the kettle 2, so that when the kettle is next used some water will cover the heater 8, thereby preventing it overheating. The poured water will be of exceptional purity, having been filtered by the filter 16 and then sterilised by the prolonged boil. Also, the tipping of the kettle 2 will act to agitate and thus de-compact the filter material 22, thereby helping to maintain a constant filter time.

When it is desired to boil some further liquid in the kettle, the knob 60 can be moved to re-close the switches 40, 42 to re-energise the heater 8, and more liquid added to the vessel 5 from the hopper 70 through the filter 16.

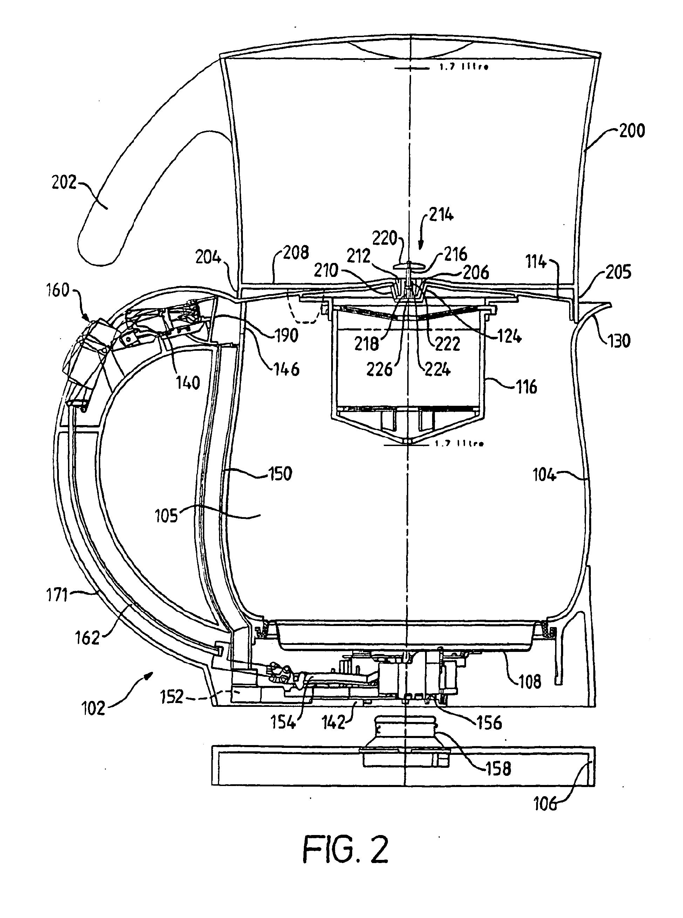

Turning now to Figure 2, a modified embodiment of the invention is disclosed. The principals of operation of this embodiment are generally the same as the first embodiment, but certain detail is different as will be described below.

As in the earlier embodiment, a cordless electrical kettle 102 comprises a vessel body 104 defining a water heating vessel 105 and a power base unit 106. A thick film heater 108 is arranged in the bottom of the vessel body 104. As before, the heater comprises two heating tracks 10, 12 as shown schematically in Figure 4.

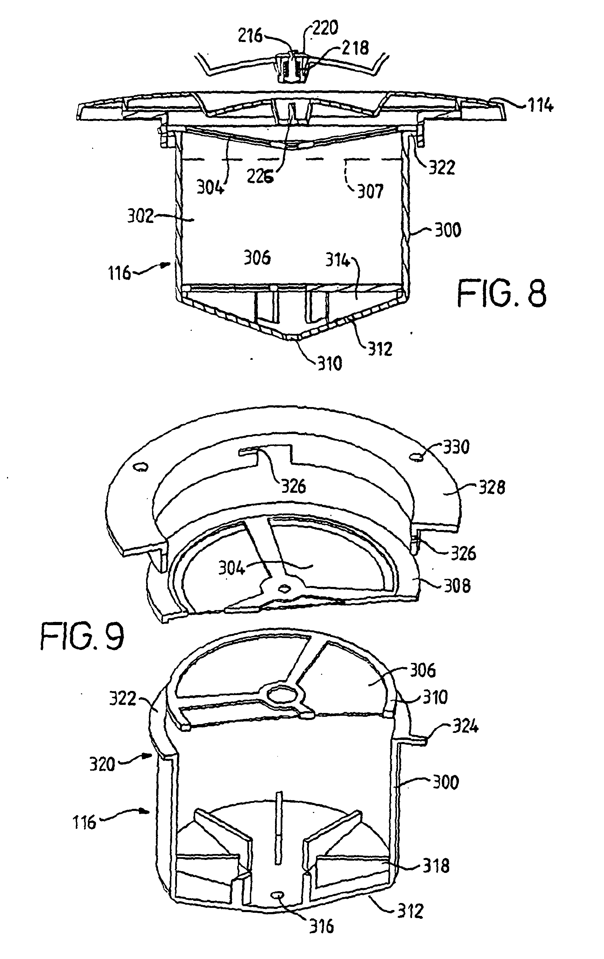

The kettle comprises a lid 114 and, removably mounted thereto, a cylindrical filter cartridge 116. The construction of the cartridge 116 and its attachment to the lid is described in greater detail below with reference to Figs. 8 and 9. As before, the cartridge 116 contains a combination of activated carbon and ion exchange resin. The lid has an opening 124 above.the cartridge 116.

The vessel body 104 is provided with a pouring spout 130 at its upper end. A removable filter (not shown) may be provided in the spout 130 to prevent scale and the like from being poured from the spout 130.

As before, the kettle 102 is provided with two steam sensitive switch units 140, 142. The first switch unit 140 is one of the Applicant's R48 steam switches which are well known in the art and need not, therefore, be described in detail here. This switch unit 140 is in good fluid communication with the vessel 105 via a steam opening 146 provided in the upper part of the vessel body 104.

The second switch unit 142 is one of the Applicant's U28 controls which is in fluid communication with the vessel 105 via the opening 146 and a steam pipe 150. As is known in the art, the U28 comprises a steam sensitive bimetal 152, a pair of overheat protection bimetals (not shown) in good thermal contact with the heater 108 as well as an electrical connector 156 for engagement with a complementary connector 158 on the base unit 106. The connector 158 is one of the Applicant's P72 connectors.

A push rod 162 extends between the first and second switch units 140, 142. At its lower end, the push rod is directly coupled to the lever arm 154 of the control unit 142. The upper end of the push rod 162 is coupled to one end of a two-part control knob 160. The other end of the control knob 160 is coupled to the first steam switch 140.

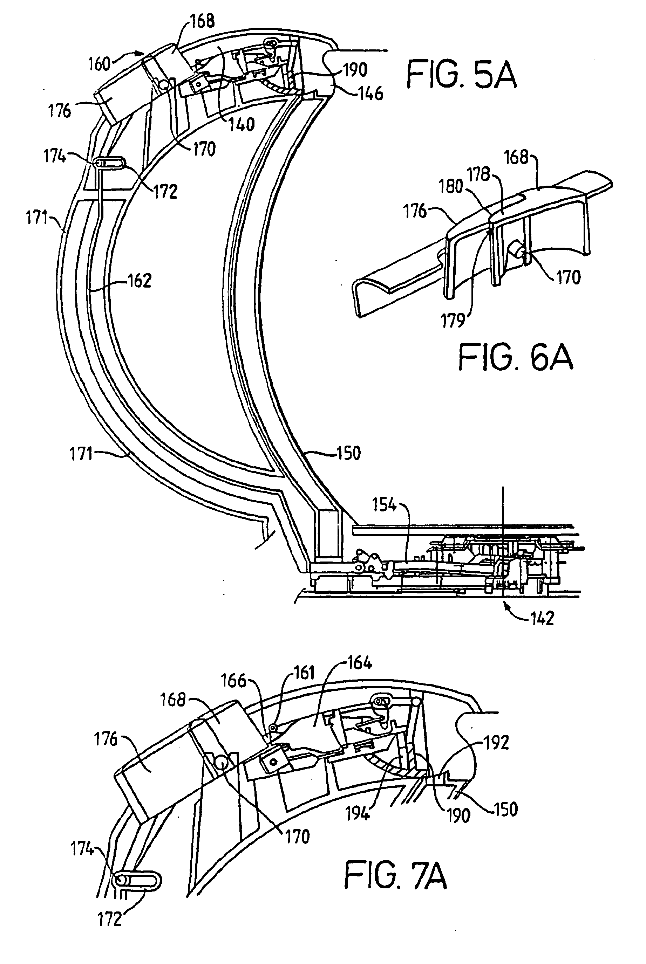

As can be seen more clearly in Figures 7A to 7C, a cam 161 is provided on the spring loaded movable arm 164 of the control 140 which engages with a lug 166 provided on a first part 168 of the knob 160 which is pivotally mounted about an axis 170. The upper end of the push rod 162 is provided with a guide 172 in which is received a pin 174 attached to a second part 176 of the control knob 160 which is also pivotally mounted about the axis 170. The push rod 162 passes through the handle 171 of the vessel, but it could, in other embodiments pass along the back wall thereof.

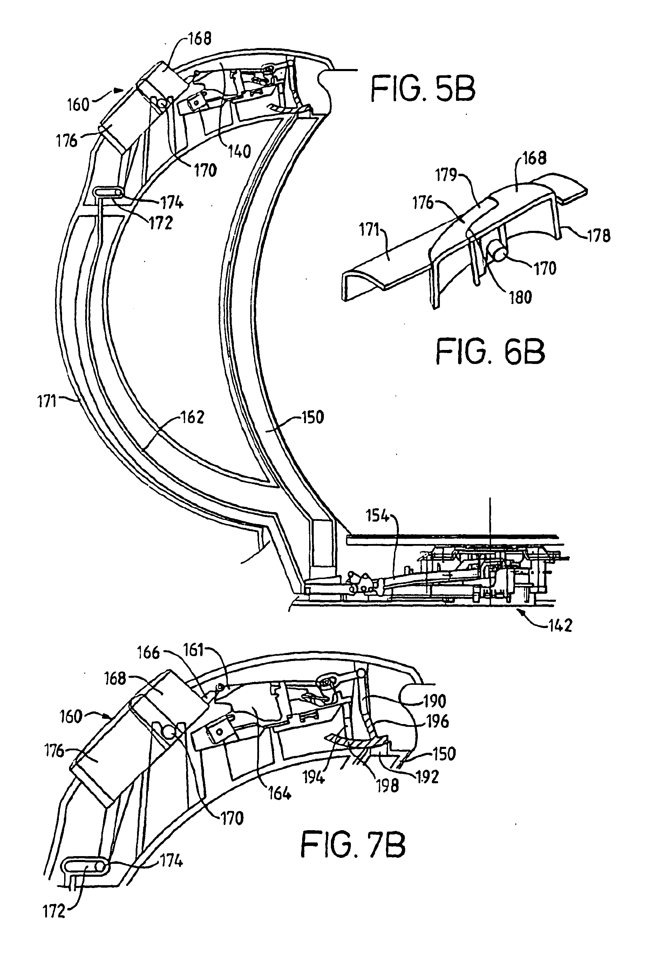

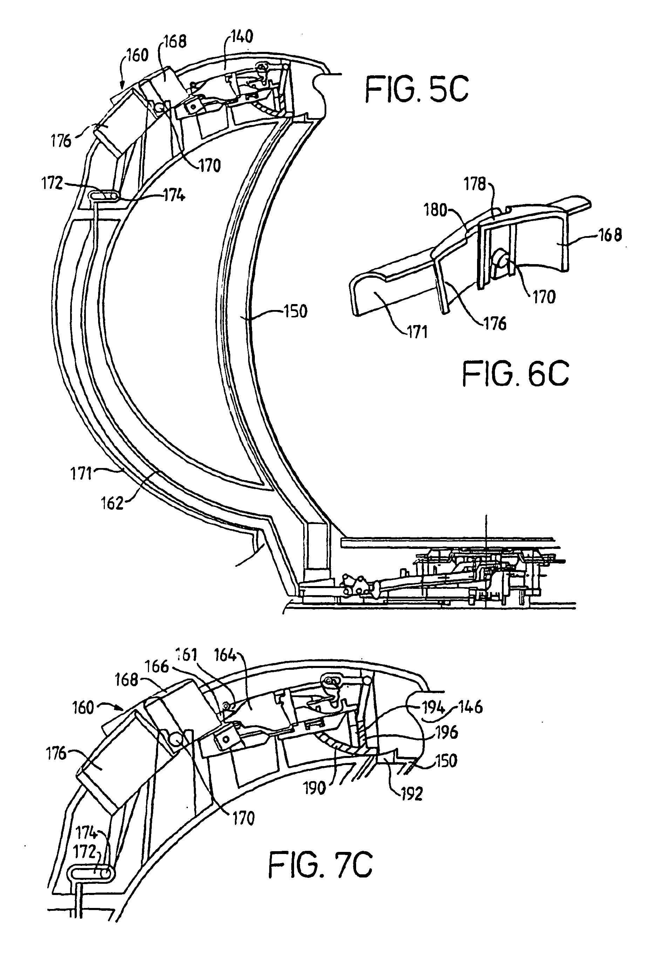

As can be seen particularly from Figures 6A to 6C, the first and second knob parts 168, 176 are form interlocking, with the first part 168 having a nose 178 which projects into a complementary recess 180 formed in the second part 176. As will be explained further below, the first and second parts 168, 176 are separately pivotable about the axis 170.

As can be seen more clearly in Figures 7A to 7C, a pivotally mounted, generally L-shaped shutter 190 is also coupled to the first switch 140. This shutter 190 is movable between two positions. In the first position shown in Figures 5B and 7B the shutter 190 blocks the entrance 192 to the steam pipe 150, thereby preventing steam reaching the second control 142. In the second position shown eg in Figures 5A and 7A it blocks the steam entrance 194 to the first steam switch 140.

Returning to the overall construction of the appliance, shown in Figure 2, a water hopper 200 is received on the lid 114 of the vessel 104. The hopper 200 is provided with a handle 202 for ease of use. The hopper 200 rests with its peripheral rim 204 on the top of the vessel body 104. It will be seen that the front portion 205 of the rim 204 extends down into the pouring spout 130 to perform a similar function to the flap 32 in the first embodiment.

An opening 206 is provided in the base 208 of the hopper 200 which aligns with the opening 124 in the lid 114. In fact, the lid opening 124 is provided in a well 210 and the hopper opening 206 in a spigot 212 which locates in the well 210. The opening 206 is fitted with a valve 214. The valve comprises a valve stem 216 slidably mounted in a bore 218 and whose upper end mounts a sealing member 220. A spring 222 is arranged in the bore 218 between the base thereof and the lower end 224 of the valve stem and acts normally to bias the sealing member 220 against its seat to close the opening. However, when the hopper 200 is positioned on the vessel body 204, the stem 216 is pushed upwardly by a spigot 226 formed on the lid to release the sealing member 220 and allow water to flow into the vessel 205.

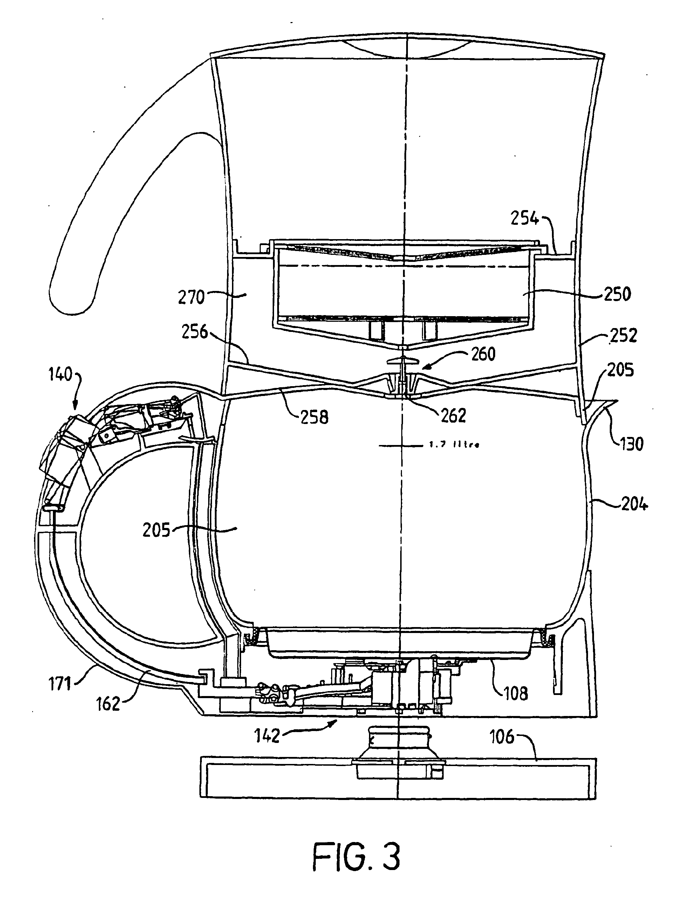

With reference now to Figure 3, a third embodiment of the invention will now be described. This embodiment is very similar in construction and mode of operation to that of Figure 2, and differs only in the arrangement of the filter 250 and the hopper 252. Accordingly, only these differences will be discussed here.

In this embodiment, the filter cartridge 250 is actually arranged within the hopper 252 rather than in the vessel 104. In particular, the hopper 252 has a generally horizontal dividing wall 254 provided about half to two-thirds down the hopper 252 and the filter 250 is mounted in this wall 254, for example by a bayonet fitting. The construction of the filter 250 is generally similar to that of the embodiment of Figure 2 and need not, therefore be described in detail here. The filter is, however, slightly squatter than that of the earlier embodiment.

The base 256 of the hopper locates on the upper surface of the lid 258 of the vessel body 104 and is provided with a valve mechanism 260 the same as that of the embodiment of Figure 2. The lid 258 is moulded with a spigot 262 to release the valve 260.

The effect of the dividing wall 254 is to create a reservoir 270 of filtered water which will be released into the vessel 205 as soon as the hopper 252 is located on the vessel body 104 so that the heater will be covered immediately and thus be unlikely to overheat if the heater is switched on straight away.

It is now appropriate to describe the mode of operation of the embodiments of Figures 2 and 3 with reference to Figures 5 to 7.

Figures 5A, 6A and 7A show the operative condition when both heaters 10, 12 are switched off. In this condition, the water hopper 200, 252 can be filled and returned to the vessel 104. In the "off" position, the knob parts 168, 176 lie in a first, coplanar, position.

With liquid in the vessel, the heaters can be turned on by depressed the knob 160 in the interlocking region 179 of the knob parts so as to move both knob parts 168, 176 together to a second coplanar position shown in Figure 5B in which both heaters are turned on via the respective controls 140, 142 which are operatively coupled to the respective knob parts 168, 170. In particular, the push rod 162 pushes down on the lever arm 154 of the control 142 and the lug 166 of the first knob part 168 pushes on the cam 161 of the movable part 164 of the control 140 to close the respective sets of contacts within the switch units.

In this second position, the upright limb 196 of the steam shutter 190 moves away from the steam opening 194 to the first control 140 so as to permit steam to enter that switch. Its curved limb 198, however, occludes the opening 192 to the steam pipe 150 so as to prevent steam entering the steam pipe 150 and thus reaching the control 142. As such when liquid in the vessel boils, substantially all the steam entering the steam inlet 146 will be conducted to the first control 140 which will then operate quickly.

When liquid in the vessel boils, the first control 140 will operate so as to disconnect the main heater of the vessel. In so doing, the cam 162 of the control 140 will move the lug 166, and thus the first knob part 168, back to its original position, as shown in Figures 7A, 7B and 7C. However, because the two knob parts 168, 176 are independently pivotable, the second knob part 176 remains in its second position, whereby the second control 142 does not operate and the lower power heater 12 will remain energised. The knob 160 adopts a "broken back" appearance which indicates to a user of the appliance that the water has been brought to boiling and is now in its prolonged boil mode.

At the same time, the steam shutter 190 which is coupled to the first control 140 moves to the position shown in Figure 7C in which the vertical limb 196 moves to close the steam opening 194 to the first control 140 and the curved limb 198 moves away from the opening 192 in the top of the steam tube 150 to allow steam to flow to the second control 142.

When sufficient steam reaches the second control 142, it too will operate to disconnect the lower power heater 12. The lever arm 154 of the control moves up and so moves the push rod 162 upwardly. The push rod 162 pivots the second knob part 176 back to its original position, as shown in Figures 5A, 6A and 7A. In this condition the power to both heaters has been disconnected and the hopper removed and liquid poured from the appliance.

The mechanism described above will also allow the main heater 10 to be reconnected during the prolonged low power heating by depressing the nose 178 of the first knob part 204, which effectively returns the system to the condition shown in Figures 5B, 6B and 7B.

Also, the mechanism is configured to allow both heaters 10, 12 to be switched out in the event of the second control 142 operating before the first control 140, for example in the event of the vessel boiling dry, being switched on dry or if it is lifted from its power stand. The interlocking profile of the knob parts 168, 176 is such that should the control 142 operate in such conditions, its movement will translate to the first knob part 168 via the second part 176 to switch off the first control 140. In alternative embodiments, the nose 178 and recess 180 may, if necessary, taper inwardly from their respective upper surfaces, or a lip or the like may be provided on the second knob part 176 such that the second knob part 176 will pick up the first part 168 as it moves.

Having described the mode of operation of the appliance, further detail is now given regarding the arrangement and construction of the filter cartridge 116.

As can be seen from Figures 8 and 9 the filter cartridge 116 comprises a moulded plastics, e.g. polypropylene body 300, contains a bed of ion exchange resin and activated carbon granules 302. The granules 302 are retained in the filter body 300 by upper and lower plastics meshes 304, 306. Although these meshes could be simple meshes suitably bonded to the body 302, in this embodiment they are insert moulded into spoked carriers 308, 310 respectively. The top of the upper mesh 304 slopes to promote flow of water towards the centre of the cartridge 116. The granules are filled to a level 307 below the upper mesh 304, eg about 5mm below.

The lower end 312 of the body is provided with a tapering drainage void 314 and a restricted aperture 316. The angle of the taper is about 20° in this embodiment. A plurality of radially extending ribs 318 act to support the lower mesh 306 above the void 314. The mesh may for example br ultrasonically bonded to the ribs 318. In this embodiment the filter diameter is about 60-65 mm and the opening diameter about 4 mm. The bed of filter material 302 is about 40-50 mm.

The upper end 320 of the body 300 is provided with a flange 322 to which is eg bonded the upper mesh 304. The flange 322 is provided with three equispaced twist locking lugs 324 for engagement with corresponding slots 326 in a mounting ring 328 which is suitably attached to the lid 114 of the vessel 102 eg by fasteners extending through holes 330. This allows the cartridge very easily to be installed and also replaced when its life is finished.

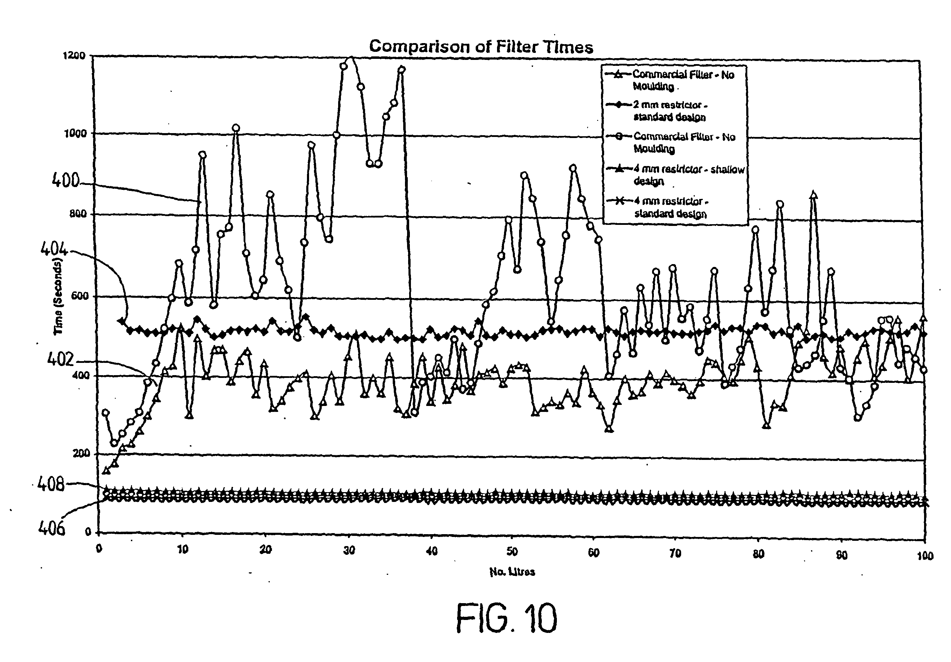

The effect of the restricted opening 316 in the cartridge base is to control the flow of liquid through the filter so as to obtain a consistent flow time through the filter. This can be illustrated with reference to Figure 10. This Figure shows the length of time to filter 1 litre of water, against the total number of litres drained. Lines 400 and 402 illustrate results obtained for commercially available filter which have no restrictions on the flow therethrough. It will be seen that there is a wide variation in the flow time and thus in the quality of treated water. Also, it may mean that in certain circumstances, water in the heating vessel into which the water drains will have boiled before filtration is complete. This is not acceptable. Lines 404, 406 and 408, however, show the effect of restricting the outlet of a filter. Line 404 represents a 2 mm diameter opening, while lines 406 and 408 represent 4mm openings in a standard depth filter and a shallower filter respectively.

The 2mm opening gives consistent, but slow, filter times while a 4 mm opening (in either a deeper or shallower filter) gives a very satisfactory time of about 100 seconds/litre. These sizes are merely illustrative, and the size of the opening can be chosen to give a suitable balance between the quality of the filtered water and the flow time to ensure filtration is complete before liquid in the vessel boils.

It will be apparent that various modifications may be made to the particular embodiments discussed above without departing from the scope of the invention.

For example, in Figures 5, 6 and 7 the top of the steam pipe is shown with a restricted circular opening 192 (which may, for example be integrally formed with the pipe, or a separate piece mounted thereto). Other arrangements are possible. For example, the steam pipe 150 could be closed by a sloping face having an opening therein. The slope (e.g. at least 30°, more preferably about 45° acts to prevent condensation build up on the closure which might impede steam flow into the steam tube. For the same reason, the opening is preferably over 1mm wide.

Of course, restrictions in or in the entrance to the steam pipe may not be necessary, and in practice the steam pipe configuration can be designed empirically in order to give the desired time taken for the second control 142 to operate.

Also, instead of providing a separate water hopper, this may be formed integrally with the vessel. In some embodiments, therefore, the filter cartridge may be mounted in a wall extending across the vessel 105. The upper part of the vessel 105 then acts as the water hopper. In a further arrangement, the hopper may be pivotally mounted to the top of the vessel body around a pivot axis preferably arranged near the handle.

Also, different methods of control may be used, for example electronic or other electromechanical systems. It will also be understood that the heating means may be differently configured to the particular configuration shown. For example, the heating means may be sheathed heating elements rather than thick film elements as disclosed.

Also the heaters or heater tracks may be configured differently. For example two heaters or heater tracks may be arranged in series, rather than in parallel. In such an arrangement the first steam control is arranged to connect the second heater or heater track in series with the first so as to reduce the overall heating power (as the total resistance will be greater). Such arrangements are clearly intended to fall within the scope of the invention. The second control will then act to switch off both elements or merely leave energised a further section for keeping water in the vessel 105 warm after it has boiled.

Also although the individual track portions have been described in the preferred embodiment as having different resistances and thus heating powers, each could be the same. In that case the "prolonged boil" heating means would have half the power of the "bring to boil" heating means if they are connected in first connected in parallel and one then switched out by the first control, or one quarter the power if the first control acts to switch both heaters in series.

Also, the appliance may have more than two heating means which are controlled by respective control means, so from a further broad aspect, the invention provides a liquid heating appliance having multiple heating means and a first steam sensitive control for controlling a first heating means and a second steam sensitive control for controlling a second heating means. For example, respective controls could be used to progressively reduce the power of the heating means.

It will also be appreciated that the split knob mechanism described above may have broader application than the particular heating vessel shown herein. For example, it could be used in any situation where different heating levels are required, eg where a main heater and a keep warm heater are provided and can be used in conjunction with boiling controls other than the steam controls described, for example boiling controls of the type which sense the temperature of a sump of the vessel, as shown in WO 97/04694. Certain other aspects of the invention may also be used more generally than in an appliance having a filter

It will also be appreciated that the filters described whilst primarily for use in a liquid heating vessel can have other application, e.g. in domestic or industrial filtration processes.

The particular filter size mentioned above is only exemplary. In some embodiments, for example, the cartridge is configured to provide a treatment material depth not less than 75 mm. Most preferably it is circular in cross section, with a typical average diameter of 45mm and a typical total internal volume of 120 cm³. These figures are, however, merely exemplary and do not limit the scope of the invention.

## Claims

1. A water heating appliance comprising a water heating vessel (5;105;205), a water receiving hopper (70;200;252) removably mountable on said vessel, filter means (16;116;250) for treating water to be heated, and **characterised in that** said appliance further comprises valve means (78;214;260) operable to release water from the hopper (70;200;252) into the vessel (5;105;205) in response to the hopper (70;200;252) being positioned on the heating vessel (5;105;205).

2. An appliance as claimed in claim 1 wherein means are provided for retaining a desired volume of water in the vessel after pouring.

3. An appliance as claimed in claim 2 or 3 wherein the filter (250) is provided in the hopper (252) and means are provided to release a predetermined amount of filtered liquid into the vessel (205) from the hopper (252) as the hopper (252) is placed thereon.

4. An appliance as claimed in claim 3 wherein a filtered water chamber (270) is formed in the hopper (252) below the filter (250), the contents of which is released into the vessel (205) when the hopper (252) is positioned thereon.

5. An appliance as claimed in any preceding claim wherein said filter means (16;116) is mounted in an upper region of the water heating vessel (5:105).

6. An appliance as claimed in any preceding claim wherein said filter means (116) is mounted in or to a lid (114) of the water heating vessel (105).

7. An appliance as claimed in any preceding claim wherein said filter means (16;116;250) comprises means for mounting it in a desired location.

8. An appliance as claimed in claim 7 wherein the mounting means comprise a twist lock, bayonet or similar fitting.

9. An appliance as claimed in claim 5 wherein said filter means is mounted in a wall extending across the heating vessel.

10. An appliance as claimed in any preceding claim further comprising an upwardly projecting spigot (226;262) formed on a lid (114;258) of the vessel which cooperates with the valve means (214;260) to open the valve means (214:260) when the hopper (200;252) is set down on the water heating vessel (105;205).

11. An appliance as claimed in any preceding claim wherein said valve means (78;214;260) is provided in an opening in the base of the hopper (70;200;252).

12. An appliance as claimed in claim 11 wherein said valve means (78;214;260) comprises a rubber sealing member (B0;220).

13. An appliance as claimed in any preceding claim wherein the outlet of said filter means (16;115;250) is restricted.

14. An appliance as claimed in any preceding claim wherein said filter means (116) comprises a filter chamber (300) and a liquid treatment medium (302) within said chamber, said chamber having a restricted outlet so as to control the flow of liquid through the treatment medium.

15. An appliance as claimed in claim 14 wherein the outlet of the filter chamber is less than 6 mm in diameter.

16. An appliance as claimed in claim 13 or 14 wherein a tapering drainage space (314) is provided between the filter material and the outlet.

17. An appliance as claimed in any preceding claim, further comprising a boiling control (42;142) arranged so as to produce a prolonged boil in the appliance.

18. An appliance as claimed in any preceding claim wherein the vessel is provided with a pouring spout (30;130) which is provided with means which reduces the egress of steam from the spout during boiling.

19. An appliance as claimed in claim 18 wherein said means comprises a flap (34;205) mounted in the spout (30; 130).

20. An appliance as claimed in claim 18 wherein said means (205) is provided on the hopper (200;252).

21. An appliance as claimed in any preceding claim wherein the hopper (70;200;252) is provided with a handle (71;202).

22. An appliance as claimed in any preceding claim wherein the hopper (70;200;252) is provided with locating means for accurately positioning the hopper on the heating vessel.

23. An appliance as claimed in any preceding claim wherein the hopper (70) is provided with a gauge (92) for showing the amount of water in the hopper (70).

## Patentansprüche

1. Wassererhitzungsvorrichtung, umfassend ein Wassererhitzungsgefäß (5; 105; 205), einen abnehmbar an dem Gefäß angebrachten Wasseraufnahmetank (70; 200; 252), Filtermittel (16; 116; 250) zum Behandeln von zu erhitzendem Wasser sowie **dadurch gekennzeichnet, dass** die Vorrichtung ferner Ventilmittel (78; 214; 260) umfasst, welche derart betreibbar sind, dass sie in Reaktion darauf, dass der Tank (70; 200; 252) an dem Erhitzungsgefäß (5; 105; 205) positioniert ist, Wasser aus dem Tank (70; 200; 252) in das Gefäß (5; 105; 205) auslassen.

2. Vorrichtung nach Anspruch 1, in welcher Mittel bereitgestellt sind, um nach dem Ausgießen ein gewünschtes Volumen an Wasser in dem Gefäß zurückzuhalten.

3. Vorrichtung nach Anspruch 2 oder 3, in welcher der Filter (250) in dem Tank (252) vorgesehen ist und Mittel bereitgestellt sind, um eine vorbestimmte Menge an gefilterter Flüssigkeit aus dem Tank (252) in das Gefäß (205) auszulassen, wenn der Tank (252) auf dieses aufgesetzt ist.

4. Vorrichtung nach Anspruch 3, in welcher eine Kammer für gefiltertes Wasser (270) in dem Tank (252) unterhalb des Filters (250) ausgebildet ist, deren Inhalt in das Gefäß (205) ausgelassen wird, wenn der Tank (252) auf diesem positioniert ist.

5. Vorrichtung nach irgendeinem vorhergehenden Anspruch, in welcher die Filtermittel (16; 116) in einem oberen Bereich des Wassererhitzungsgefäßes (5; 105) angebracht sind.

6. Vorrichtung nach irgendeinem vorhergehenden Anspruch, in welcher die Filtermittel (116) in oder an einem Deckel (114) des Wassererhitzungsgefäßes (105) angebracht sind.

7. Vorrichtung nach irgendeinem vorhergehenden Anspruch, in welcher die Filtermittel (16; 116; 250) Mittel umfassen, um diese an einer gewünschten Stelle anzubringen.

8. Vorrichtung nach Anspruch 7, in welcher die Anbringungsmittel eine Drehverriegelungshalterung, eine Bajonetthalterung oder dergleichen umfassen.

9. Vorrichtung nach Anspruch 5, in welcher die Filtermittel in einer sich durch das Erhitzungsgefäß erstreckenden Wand angebracht sind.

10. Vorrichtung nach irgendeinem vorhergehenden Anspruch, ferner umfassend einen nach oben vorstehenden Stutzen, der an einem Deckel (114, 258) des Gefäßes (226; 262) gebildet ist, und welcher mit den Ventilmitteln (214; 260) zusammenwirkt, um die Ventilmittel (214; 260) zu öffnen, wenn der Tank (200; 252) auf dem Wassererhitzungsgefäß (105; 205) aufgesetzt ist.

11. Vorrichtung nach irgendeinem vorhergehenden Anspruch, in welcher die Ventilmittel (78; 214; 260) in einer Öffnung in der Basis des Tanks (70; 200; 252) vorgesehen sind.

12. Vorrichtung nach Anspruch 11, in welcher die Ventilmittel (78; 214; 260) ein Gummidichtungselement (80; 220) umfassen.

13. Vorrichtung nach irgendeinem vorhergehenden Anspruch, in welcher der Auslass der Filtermittel (16; 116; 250) begrenzt ist.

14. Vorrichtung nach irgendeinem vorhergehenden Anspruch, in welcher die Filtermittel (116) eine Filterkammer (300) und ein Flüssigkeitsbehandlungsmedium (302) innerhalb der Kammer umfassen, wobei die Kammer einen begrenzten Auslass aufweist, um die Strömung von Flüssigkeit durch das Behandlungsmedium zu steuern.

15. Vorrichtung nach Anspruch 14, in welcher der Auslass der Filterkammer im Durchmesser geringer ist als 6 mm.

16. Vorrichtung nach Anspruch 13 oder 14, in welcher ein sich verjüngender Abflussraum (314) zwischen dem Filtermaterial und dem Auslass vorgesehen ist.

17. Vorrichtung nach irgendeinem vorhergehenden Anspruch, ferner umfassend eine Koch-/Siede-Steuerung/Regelung (42; 142), welche derart eingerichtet ist, dass sie ein verlängertes Kochen/Sieden in der Vorrichtung erzeugt.

18. Vorrichtung nach irgendeinem vorhergehenden Anspruch, in welcher das Gefäß mit einer Ausgusstülle (30; 130) versehen ist, welche mit Mitteln versehen ist, die den Austritt von Dampf aus der Tülle während des Kochens/Siedens reduzieren.

19. Vorrichtung nach Anspruch 18, in welcher die Mittel eine Klappe (34; 205) umfassen, die in der Tülle (30; 130) angebracht ist.

20. Vorrichtung nach Anspruch 18, in welcher die Mittel (205) an dem Tank (200; 252) vorgesehen sind.

21. Vorrichtung nach irgendeinem vorhergehenden Anspruch, in welcher der Tank (70; 200; 252) mit einem Griff (71; 202) versehen ist.

22. Vorrichtung nach irgendeinem vorhergehenden Anspruch, in welcher der Tank (70; 200; 252) mit Positioniermitteln zum genauen Positionieren des Tanks an dem Erhitzungsgefäß versehen ist.

23. Vorrichtung nach irgendeinem vorhergehenden Anspruch, in welcher der Tank (70) mit einem Maß (92) zum Anzeigen der Menge an Wasser in dem Tank (70) versehen ist.

## Revendications

1. Appareil de chauffage d'eau comprenant une cuve de chauffage d'eau (5 ; 105 ; 205), une trémie de réception d'eau (70 ; 200 ; 252) pouvant être montée de façon amovible sur ladite cuve, un moyen de filtrage (16 ; 116 ; 250) servant à traiter l'eau à chauffer, et **caractérisé en ce que** ledit appareil comprend en outre un moyen de soupape (78 ; 214 ; 260) pouvant fonctionner pour libérer l'eau de la trémie (70 ; 200 ; 252) dans la cuve (5 ; 105 ; 205) en réponse au positionnement de la trémie (70 ; 200 ; 252) sur la cuve de chauffage (5 ; 105 ; 205).

2. Appareil selon la revendication 1, dans lequel des moyens sont mis en oeuvre pour retenir un volume d'eau souhaité dans la cuve après le déversement.

3. Appareil selon la revendication 2 ou 3, dans lequel le filtre (250) est disposé dans la trémie (252) et des moyens sont mis en oeuvre pour libérer une quantité prédéterminée de liquide filtré dans la cuve (205) depuis la trémie (252) lorsque la trémie (252) est placée dessus.

4. Appareil selon la revendication 3, dans lequel une chambre d'eau filtrée (270) est formée dans la trémie (252) sous le filtre (250), dont le contenu est libéré dans la cuve (205) lorsque la trémie (252) est positionnée dessus.

5. Appareil selon l'une quelconque des revendications précédentes, dans lequel ledit moyen de filtrage (16 ; 116) est monté dans une région supérieure de la cuve de chauffage d'eau (5 ; 105).

6. Appareil selon l'une quelconque des revendications précédentes, dans lequel ledit moyen de filtrage (116) est monté dans ou sur un couvercle (114) de la cuve de chauffage d'eau (105).

7. Appareil selon l'une quelconque des revendications précédentes, dans lequel ledit moyen de filtrage (16 ; 116 ; 250) comprend des moyens pour le monter à un emplacement souhaité.

8. Appareil selon la revendication 7, dans lequel les moyens de montage comprennent un verrou hélicoïdal, une baïonnette ou une fixation similaire.

9. Appareil selon la revendication 5, dans lequel ledit moyen de filtrage est monté sur une paroi s'étendant à travers la cuve de chauffage.

10. Appareil selon l'une quelconque des revendications précédentes, comprenant en outre un robinet faisant saillie vers le haut (226 ; 262) formé sur un couvercle (114 ; 259) de la cuve, qui coopère avec le moyen de soupape (214 ; 260) pour ouvrir le moyen de soupape (214 ; 260) lorsque la trémie (200 ; 252) est installée sur la cuve de chauffage d'eau (105 ; 205).

11. Appareil selon l'une quelconque des revendications précédentes, dans lequel ledit moyen de soupape (78 ; 214 ; 260) est disposé dans une ouverture dans la base de la trémie (70 ; 200 ; 252).

12. Appareil selon la revendication 11, dans lequel ledit moyen de soupape (78 ; 214 ; 260) comprend un élément de scellement en caoutchouc (80 ; 220).

13. Appareil selon l'une quelconque des revendications précédentes, dans lequel l'orifice de sortie dudit moyen de filtrage (16 ; 115 ; 250) est restreint.

14. Appareil selon l'une quelconque des revendications précédentes, dans lequel ledit moyen de filtrage (116) comprend une chambre de filtrage (300) et un milieu de traitement de liquide (302) à l'intérieur de ladite chambre, ladite chambre ayant un orifice de sortie étroit afin de contrôler l'écoulement de liquide à travers le milieu de traitement.

15. Appareil selon la revendication 14, dans lequel l'orifice de sortie de la chambre de filtrage a un diamètre inférieur à 6 mm.

16. Appareil selon la revendication 13 ou 14, dans lequel un espace de drainage effilé (314) est disposé entre le matériau de filtre et l'orifice de sortie.

17. Appareil selon l'une quelconque des revendications précédentes, comprenant en outre une commande d'ébullition (42 ; 142) adaptée pour produire une ébullition prolongée dans l'appareil.

18. Appareil selon l'une quelconque des revendications précédentes, dans lequel la cuve est munie d'une goulotte de déversement (30 ; 130) qui est munie d'un moyen qui réduit la sortie de vapeur de la goulotte pendant l'ébullition.

19. Appareil selon la revendication 18, dans lequel ledit moyen comprend un volet (34 ; 205) monté dans la goulotte (30 ; 130).

20. Appareil selon la revendication 18, dans lequel ledit moyen (205) est prévu sur la trémie (200 ; 252).

21. Appareil selon l'une quelconque des revendications précédentes, dans lequel la trémie (70 ; 200 ; 252) est munie d'une poignée (71 ; 202).

22. Appareil selon l'une quelconque des revendications précédentes, dans lequel la trémie (70 ; 200 ; 252) est munie de moyens de positionnement servant à positionner avec précision la trémie sur la cuve de chauffage.

23. Appareil selon l'une quelconque des revendications précédentes, dans lequel la trémie (70) est munie d'une jauge (92) servant à montrer la quantité d'eau dans la trémie (70).
